(19) Europäisches Patentamt
European Patent Office
Office européen des brevets

(11) Veröffentlichungsnummer : **0 093 362**
**B1**

(12) # EUROPÄISCHE PATENTSCHRIFT

(45) Veröffentlichungstag der Patentschrift : **20.02.85**

(51) Int. Cl.⁴ : **C 09 B 49/12**, C 09 B 47/24

(21) Anmeldenummer : **83104005.0**

(22) Anmeldetag : **23.04.83**

(54) **Verfahren zur Herstellung von Schwefelfarbstoffen der Phthalocyanin-Reihe.**

(30) Priorität : **30.04.82 DE 3216125**

(43) Veröffentlichungstag der Anmeldung : **09.11.83 Patentblatt 83/45**

(45) Bekanntmachung des Hinweises auf die Patenterteilung : **20.02.85 Patentblatt 85/08**

(84) Benannte Vertragsstaaten : **CH DE FR GB IT LI**

(56) Entgegenhaltungen :
**FR-A- 1 526 096**
**GB-A- 992 381**
**US-A- 2 342 663**
**US-A- 2 484 300**
**US-A- 3 378 568**

(73) Patentinhaber : **CASSELLA Aktiengesellschaft**
**Hanauer Landstrasse 526**
**D-6000 Frankfurt am Main 61 (DE)**

(72) Erfinder : **Bauer, Wolfgang, Dr.**
**Masurenstrasse 6**
**D-6457 Maintal 3 (DE)**
Erfinder : **Kühlein, Klaus, Dr.**
**Fasanenstrasse 41**
**D-6233 Kelkheim/Taunus (DE)**
Erfinder : **Nagl, Gert, Dr.**
**Ulmenweg 6**
**D-6369 Niederdorfelden (DE)**

(74) Vertreter : **Urbach, Hans-Georg, Dr. et al**
**Hanauer Landstrasse 526**
**D-6000 Frankfurt am Main 61 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 093 362 B1

Jouve, 18, rue St-Denis, 75001 Paris, France

**Beschreibung**

Die vorliegende Erfindung betrifft ein Verfahren zur Herstellung von Schwefelfarbstoffen der Phthalocyanin-Reihe durch Reduktion von Phthalocyanin-sulfochloriden der Formel I

$$Pc(SO_2Cl)_n \qquad (I)$$

worin Pc den Rest eines metallfreien Phthalocyanins oder eines metallhaltigen Phthalocyanins und n die Zahl 1, 2, 3 oder 4, vorzugsweise 2, 3 oder 4, bedeuten.

Es sind bereits verschiedene Reduktionsmethoden bekannt, Phthalocyaninsulfochloride der allgemeinen Formel I in Schwefelfarbstoffe zu überführen (vgl. beispielsweise D.C. Orton in K. Venkataraman « The Chemistry of Synthetic Dyes », Vol. VII, Seiten 12 bis 13, Academic Press (1974)).

Beispielsweise werden Kupferphthalocyanin-sulfochloride im sauren Reaktionsmedium mit Zink oder Eisen in die entsprechenden Kupferphthalocyaninmercaptane überführt, die zum Färben von Cellulosefasern in blauen bzw. grünen Farbtönen geeignet sind (vgl. brit. Patent 544 953 und US Patent 2 484 300). Mercepto-kupferphthalocyanine werden ebenfalls durch Reduktion von Kupferphthalocyaninsulfochloriden mit Thioharnstoff und Eisen(II)-Salzen erhalten (rum. Patentschrift 57 389, Chem. Abstracts *84*, 46 054 h). Bei diesen Reduktionsmethoden fallen memtallhaltige Abwässer an, welche ökologisch ungünstig sind und deren Aufbereitung hohe Kosten verursacht.

Weiterhin ist bereits bekannt, Kupfer- bzw. Nickelphthalocyanin-sulfochloride mit Hydrazin (brit. Patentschrift 960 643) in die Phthalocyanin-sulfinate, oder mit Natriumsulfid bzw. Natriumhydrogensulfid (US-Patentschrift 3 378 568, US-Patentschrift 3 420 615) in Phthalocyaninsulfinate mit zusätzlichen Thiosulfonat-Gruppen zu überführen. Dier so hergestellten Phthalocyanin-Derivate, die entweder Sulfinat- oder Sulfinat- und Thiosulfonat-Gruppen enthalten, werden anschließend mit Thiosulfat oder Natriumpolysulfid in einem Autoklaven bei erhöhten Temperaturen von beispielsweise 140 bis 180 °C in grüne Schwefelfarbstoffe überführt (US-Patentschrift 3 378 568). Dieses Verfahren weist den Nachteil auf, daß zwei Verfahrensschritte und hohe Temperaturen bei der Farbstoffherstellung erforderlich sind.

Nach einem weiteren bekannten Verfahren (franz. Patentschrift 1 526 096) werden Kupferphthalocyanin-sulfochloride mit Thioharnstoff, bzw. mit Natriumsulfid und Thioharnstoff, zu Schwefelfarbstoffen reduziert, die aus schwefelalkalischer Lösung Cellulosefasern in grünen Farbtönen färben. Bei diesem Verfahren sind große Mengen an Thioharnstoff erforderlich, die den Prozeß verteuern und zu Fabrikationsabwässern mit einem hohen Bestandteil an organischen, biologisch schwer abbaubaren Verbindungen führen. In ähnlicher Weise können wasserunlösliche Phthalocyaninfarbstoffe mit Polysulfid- und Isothioharnstoff-Gruppen durch Reaktion von Phthalocyanin-sulfochloriden mit Thioharnstoff bzw. Thioharnstoff und Eisen oder Eisen(II)-Salzen hergestellt werden (Rev. Chim. (Bucharest), 1975, 26 (12), 993 ; Chem. Abstracts *85*, 7241 t).

Nach einer weiteren bekannten Herstellungsmethode für grüne Schwefelfarbstoffe mit Phthalocyaninresten (vgl. US-Patentschriften 2 342 662 und 2 395 117) werden Nitrokupferphthalocyanine, hergestellt aus Nitrophthalimid, Harnstoff und Kupferchlorid, bei Temperaturen von 190 bis 210 °C, mit Natrium-sulfhydratlauge zu den entsprechenden Amino-kupferphthalocyaninen reduziert. Diese werden in einer weiteren Reaktionsstufe diazotiert und mit Natriumthiocyanat zu Thiocyanato-kupferphthalocyaninen umgesetzt, die als grüne Schwefelfarbstoffe eingesetzt werden können. Dieses Verfahren weist eine Reihe von wirtschaftlichen und ökologischen Nachteilen auf, bedingt durch den erforderlichen Einsatz einer Vielzahl von Apparaturen bei dem in schlechter Raum-/Zeitausbeute verlaufenden 3-Stufen-Prozeß und durch die bei jeder Reaktionsstufe anfallenden ökologisch ungünstigen Fabrikationsabwässer.

Bei Phthalocyaninen, die mehr als eine Sulfochlorid-Gruppe aufweisen, wird mit Natriumbisulfit oder Natriumsulfit lediglich eine Sulfochlorid-Gruppe zur Sulfinsäure-Gruppe reduziert, während zusätzliche Sulfochlorid-Gruppen zu Sulfonsäure-Gruppen hydrolysiert werden (brit. Patentschrift 960 643).

Das erfindungsgemäße Verfahren weist die Schwierigkeiten und Nachteile der bisher bekannten Reduktionsverfahren von Phthalocyaninsulfochloriden zu Schwefelfarbstoffen nicht auf.

Das erfindungsgemäße Verfahren zur Herstellung von Schwefelfarbstoffen der Phthalocyanin-Reihe durch Reduktion von Phthalocyanin-sulfochloriden der Formel I ist dadurch gekennzeichnet, daß die Verbindung der Formel I in Gegenwart von Iodwasserstoffsäure und eines Reduktionsmittels reduziert wird, das im sauren Reaktionsmedium Iod in Iodwasserstoffsäure überführt.

Als Ausgangsprodukt der Formel I sind für das erfindungsgemäße Verfahren geeignet die Mono-, Di-, Tri- und Tetrasulfochloride des Phthalocyanins und metallhaltiger Phthalocyanine, wie z. B. des Kupferphthalocyanins, Nickelphthalocyanins, Kobaltphthalocyanins. Geeignete Ausgangsprodukte der Formel I sind z. B. : Phthalocyanin-tetrasulfochlorid, Kupferphthalocyanin-disulfochlorid, Kupferphthalocyanin-trisulfochlorid, Kupferphthalocyanin-tetrasulfochlorid, Nickelphthalocyanin-tetrasulfochlorid, Nickelphthalocyanin-trisulfochlorid, Kobaltphthalocyanintrisulfochlorid, Kobaltphthalocyanin-tetrasulfochlorid oder Mischungen der angegebenen Phthalocyanin-sulfochloride. Die Phthalocyanin-sulfochloride der Formel I sind bekannte Verbindungen bzw. können in an sich bekannter Weise, beispielsweise durch Sulfochlorierung von Phthalocyaninen mit Chlorsulfonsäure oder Chlorsulfonsäure

und Thionylchlorid bei erhöhten Temperaturen hergestellt werden (vgl. beispielsweise D.G. Orton in K. Venkataraman « The Chemistry of Synthetic Dyes », Vol. VII, Seiten 12 bis 13, Academic Press, 1974, und dort zitierte Literatur).

Die Reduktion wird bei dem erfindungsgemäßen Verfahren mit Iodwasserstoffsäure durchgeführt. Dabei brauchen nur katalytische Mengen Iodwasserstoffsäure eingesetzt zu werden. Anstelle von Iodwasserstoffsäure kann auch eine äquivalente Menge einer Substanz eingesetzt werden, die unter den Reaktionsbedingungen Iodwasserstoffsäure bildet, wie z. B. Iod oder ein Iodid, insbesondere ein Alkali-iodid, wie z. B. Natrium- oder Kalium-iodid oder Phosphortriiodid. Es können auch Gemische von Iodwasserstoffsäure und/oder Iodwasserstoffsäure liefernden Substanzen eingesetzt werden. Neben der Iodwasserstoffsäure bzw. der Iodwasserstoffsäure liefernden Substanz wird noch ein weiteres Reduktionsmittel eingesetzt, das in dem sauren Reaktionsmedium bei den zur Anwendung kommenden Reaktionsbedingungen das bei der Reduktion frei werdende Iod bzw. das eingesetzte Iod wieder in Iodwasserstoffsäure überführt. Reduktionsmittel mit einem derartigen Redoxpotential sind z. B. Schwefeldioxid, Schwefeldioxid liefernde Substanzen, wie z. B. Hydrogensulfite, Sulfite oder Pyrosulfite ; ferner sind z. B. geeignet phosphorige Säure, Phosphite, hypophosphorige Säure, Hypophosphite, Hydrazin, Hydrazinsalze, wie Hydrazinchlorid, Hydrazinsulfat oder Dihydrazinsulfat. Als Hydrogensulfite, Sulfite, Phosphite, Hypophosphite, Pyrosulfite werden vor allem die entsprechenden Alkalisalze, insbesondere die entsprechenden Natrium- oder Kaliumsalze, eingesetzt. Es können auch Gemische verschiedener derartiger Reduktionsmittel zur Anwendung kommen, sofern keine Nebenreaktionen zwischen ihnen eintreten. Als Reduktionsmittel sind Schwefeldioxid und Schwefeldioxid liefernde Substanzen, wie Hydrogensulfite, Sulfite, Pyrosulfite, bevorzugt.

Das erfindungsgemäße Verfahren wird in Wasser oder in einem Gemisch aus Wasser und einem oder mehreren mit Wasser mischbaren organischen Lösungsmittel durchgeführt. Als geeignete mit Wasser mischbare organische Lösungsmittel sind z. B. zu nennen : Alkohole, insbesondere mit 1 bis 4 C-Atomen, wie z. B. Methanol, Ethanol, i-Propanol, n-Propanol, tert.-Butanol, Ketone, wie z. B. Aceton oder Methylethylketon, Carbonsäuren, wie z. B. Essigsäure. Die Durchführung des erfindungsgemäßen Verfahrens in Wasser ist bevorzugt.

Das erfindungsgemäße Verfahren wird bei Temperaturen von 20 bis 200 °C, vorzugsweise 60 bis 130 °C, zweckmäßigerweise unter Rühren durchgeführt. Bei Reaktionstemperaturen, die bei Normaldruck oberhalb des Siedepunkts des Wassers oder eines mit Wasser mischbaren organischen Lösungsmittels liegen, wird die Reaktion in einem Autoklaven ausgeführt. Auch wenn als weiteres Reduktionsmittel Schwefeldioxid oder eine Schwefeldioxid abspaltende Substanz verwendet wird, ist die Durchführung der Reaktion in einem Autoklaven zweckmäßig. Sie ist in dem genannten Temperaturbereich unter dem sich einstellenden Überdruck normalerweise nach Reaktionszeiten von 30 Minuten bis 8 Stunden beendet. Zu Beginn der Reaktion sollte die wäßrige Phase einen pH-Wert kleiner als 4 besitzen. Normalerweise stellt sich ein derartiger pH-Wert in der wäßrigen Phase ohne besonderes Zutun ein. Nur für den Fall, daß für die Reduktion des Iods zu Iodwasserstoffsäure ein stark alkalisches Reduktionsmittel, wie Hydrazin, verwendet wird, ist eine entsprechende gesonderte Einstellung des pH-Werts, z. B. mit einer Mineralsäure, wie HCl, $H_2SO_4$ etc., erforderlich. Nach der Beendigung der Reduktion wird der gebildete Schwefelfarbstoff durch Filtration isoliert.

Bei dem erfindungsgemäßen Verfahren werden pro vorhandene Sulfochlorid-Gruppe in einem Mol Ausgangsverbindung der Formel I eingesetzt : an Iodwasserstoffsäure oder Iodwasserstoffsäure liefernder Substanz normalerweise 0,001 bis 0,5 mol, vorzugsweise 0,005 bis 0,1 mol ; 1 bis 2, vorzugsweise 1,25 bis 1,75 Reduktionsäquivalente des Reduktionsmittels, das Iod in Iodwasserstoffsäure überführt. Das sind bei Schwefeldioxid, Hydrogensulfit, Sulfit, phosphoriger Säure und Phosphit 2 bis 4 mol, vorzugsweise 2,5 bis 3,5 mol ; bei hypophosphoriger Säure, Hypophosphit, Pyrosulfit, Hydrazin, Hydrazinchlorid, Hydrazinsulfat sind das 1 bis 2 mol, vorzugsweise 1,25 bis 1,75 mol, und bei Dihydrazin-sulfat sind das 0,5 bis 1 mol, vorzugsweise 0,625 bis 0,875 mol.

Nach einer besonderen Ausgestaltung des erfindungsgemäßen Verfahrens wird es in Gegenwart eines Phasentransferkatalysators und/oder eines Tensids durchgeführt.

Geeignete Phasentransferkatalysatoren sind beispielsweise beschrieben in Charles M. Starks and Charles Liotta : Phase Transfer Catalysis, Academic Press, New York, San Francisco, London, (1978), 57 bis 88 ; F. Vögtle (Editor), Host Guest Complex Chemistry I, Springer Verlag Berlin, Heidelberg, New York, (1981), 3 bis 16, erschienen in der Reihe « Topics in Current Chemistry » als Band 98 ; E.V. Dehmlov in Angewandte Chemie, Internationale Edition, Band 13, Nr. 3, (1974), 170 ; Jozef Dockx in Synthesis (1973), 441 bis 456 ; Herbert Lehmkuhl, Farroch Rabet, Klaus Hauschild Synthesis, (1977), 184 bis 186 ; Fernando Montanari, Dario Landini, Franco Rolla : Phase Transfer Catalyzed Reactions in Topics in Current Chemistry (1982), Vol. 101, 163 bis 172.

Im Rahmen der vorliegenden Erfindung sind als Phasentransferkatalysatoren besonders geeignet Oniumsalze, z. B. solche der Formeln

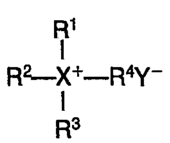 (IIa)

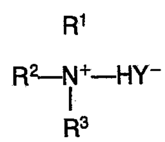 (IIb)

worin $R^1$, $R^2$, $R^3$, $R^4$ gleiche oder verschiedene Alkylreste mit 1 bis 25 C-Atomen, Hydroxyalkylreste mit 2 bis 25 C-Atomen, Aryl, insbesondere Phenyl, Aralkyl, insbesondere Benzyl, Cycloalkenyl, insbesondere Cyclopentenyl und Cyclohexenyl und $X^+ = N^+, P^+, As^+$ oder $S^+$ und $Y^- =$ ein Anion, insbesondere $Cl^-$, $Br^-$, $I^-$, $NO_3^-$, $HSO_4^-$, 1/2 $SO_4''$, 1/3 $PO_4'''$, $CN^-$, Tosylat, Benzoat, Picrat, p-Nitrobenzoat, Perchlorat, β-Naphthalin-sulfonat, Acetat bedeuten. In den Formeln II können auch zwei der Reste $R^1$, $R^2$, $R^3$ oder $R^4$ zusammen mit dem $X^+$ oder $N^+$, an das sie gebunden sind, ein Ringsystem mit 5 bis 7 C-Atomen bilden. Von den Verbindungen der Formel IIa sind Ammoniumsalze bevorzugt.

Auch Iodoniumsalze, die sinngemäß den Oniumverbindungen der Formel IIa oder IIb entsprechen, sind geeignet.

Auch Di- und Poly-oniumsalze sind geeignet, das sind solche Verbindungen, in denen die Oniumgruppierung, z. B. $R^1$, $R^2$, $R^3$, $R^4$, $X^+$, mehrere Male wiederholt ist. Dabei sind die $X^+$-Atome durch Aralkylgruppen oder lange Alkylreste mit mehr als 10 C-Atomen miteinander verknüpft.

Die Oniumsalze enthalten vorzugsweise mehr als 10 C-Atome, vorzugsweise 16 bis 40 C-Atome, in der Regel aber weniger als 70 C-Atome, pro positiv geladenem Oniumatom.

Ferner sind als Phasentransferkatalysatoren geeignet: cyclische Oligomere des Ethylenoxids oder makrocyclische Polyether der Formel III

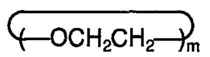

(III)

wobei m = 4 bis 10 bedeutet, das sind sogenannte Kronenether, an die auch eine oder mehrere Benzol- oder Cyclohexankerne ankondensiert sein können, (C.J. Pederson, J.A.CS 89, (1967), 7017); ferner Coronandsulfide (Thiakronenether), das sind Kronenether der vorgenannten Formel, bei denen ein Sauerstoffatom, mehrere oder alle Sauerstoffatome durch —S— ersetzt sind; Coronandamine (Azakronenether), das sind Kronenether der vorgenannten Formel III, bei denen ein Sauerstoffatom, mehrere oder alle Sauerstoffatome durch —NH-Gruppen ersetzt sind. Entsprechend sind auch gemischte O, N, S, P-Coronanden, sowie Coronanden mit heteroaromatischen Ringen geeignet, das sind Kronenether, bei denen eine oder mehrere Ethanopositionen ($-CH_2OCH_2-$) durch in den Kronenetherring inkorporierte heteroaromatische Kerne, wie Furan, Pyridin, Thiophen, ersetzt sind. Ferner sind z. B. geeignet Cryptanden, das sind Azakronenether oder Coronandamine mit mindestens zwei Stickstoffatomen im Kronenetherring, die durch zusätzliche Oligoetherketten überbrückt sind, sowie mehrseitige Kronenverbindungen. An alle vorgenannten Verbindungen können auch eine oder mehrere Benzol- oder Cyclohexan-kerne ankondensiert sein. Gut geeignet sind auch offenkettige Kronenverbindungen sowie offenkettige Cryptanden, die man beide auch als sogenannte Podanden bezeichnet.

Geeignete offenkettige Kronenverbindungen sind insbesondere acyclische Oligomere des Ethylenoxids, vor allem solche der Formeln

$$R^5-(OCH_2CH_2)_p-O-R^6 \qquad (IV)$$

$$R^5-O-(CH_2CH_2O)_p-(CH_2)_q-CH_2O-R^6 \qquad (V)$$

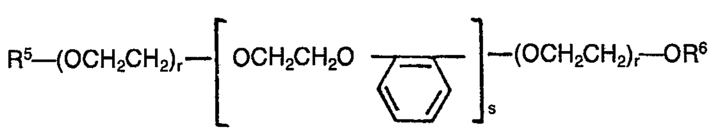

(VI)

worin $R^5$, $R^6$ verschieden oder vorzugsweise gleich sind und Alkylreste mit 1 bis 15 C-Atomen, insbesondere Methyl, Chinolyl, insbesondere Chinolyl-8, Alkylcarbonyl mit 1 bis 15 C-Atomen im Alkylrest, insbesondere Methyl-carbonyl, Phenyl, Phenyl substituiert, insbesondere in 2-Stellung, durch Alkoxy mit 1 bis 4 C-Atomen, insbesondere $OCH_3$, Nitro, COOH, Alkoxy-carbonyl mit 1 bis 4 C-Atomen im Alkoxyrest, insbesondere $COOC_2H_5$, Alkylaminocarbonyl mit 1 bis 4 C-Atomen im Alkylrest, Alkylcarbonylamino mit 1 bis 4 C-Atomen im Alkylrest und p = 3 bis 50, insbesondere 3 bis 25, q = 1 bis 10, insbesondere 3, r = 2 bis 12 und s = 1 bis 6, insbesondere 1 bis 4, bedeuten. Ferner sind als Phasentransferkatalysatoren geeignet sogenannte Podandocoronanden, Oktopusmoleküle und makrocyclische Oligoketone und Spheranden. Geeignete makrocyclische Oligoketone leiten sich von der oben angegebenen Kronenetherformel durch Ersatz eines Sauerstoffatoms, mehrerer oder aller Sauerstoffatome durch Ketogruppen (—CO—) ab. Die vorstehend aufgeführten Phasentransferkatalysatoren sind z. B. beschrieben in F. Vögtle, Host Guest Complex Chemistry I, loc. cit. und in der dort zitierten Literatur.

Im Rahmen des erfindungsgemäßen Verfahren sind als Phasentransferkatalysatoren ferner geeignet tertiäre Amine der Formel VII

$$N-[CHR^7-CHR^8-O-(CHR^9-CHR^{10}-O)_t-R^{11}]_3 \qquad (VII)$$

worin t eine ganze Zahl von 0 bis 10 ($0 \leq n \leq 10$) ist, $R^7$, $R^8$, $R^9$ und $R^{10}$ gleich oder verschieden sind und ein Wasserstoffatom oder einen Alkylrest mit 1 bis 4 C-Atomen darstellen und $R^{11}$ einen Alkyl- oder

Cycloalkylrest mit 1 bis 12 C-Atomen, einen Phenylrest oder einen $—C_vH_{2v+1}—C_6H_5$ oder $—C_vH_{2v}—C_6H_5$ Rest bedeuten, in dem v zwischen 1 und 12 liegt. Die Herstellung der Verbindungen der Formel VI ist in den europäischen Patentschriften 21 868 und 21 927 beschrieben.

Geeignete Tenside sind z. B. Aniontenside, wie z. B. Schwefelsäureester, wie sulfatierte Öle und Fettsäuren, sulfatierte Ester und Amide, Alkylsulfate, sulfatierte Ether, ferner Alkylsulfonate, wie Sulfobernsteinsäureester, Alkylnaphthalinsulfonate ; Kationtenside, wie primäre, sekundäre und tertiäre Aminsalze, quartäre Ammonium-, Phosphonium- oder Sulfoniumverbindungen, Amphotenside, wie Betaine, Sulfobetaine und Sulfatbetaine ; nichtionogene Tenside, wie z. B. Fettsäureester von Alkoholen, Ethylenglykol, Polyethylenglykolen, Propylenglykolen, Glycerin, Polyglyzerin, Sorbit, Pentaerythrit, Saccharose ; Fettamine, Fettamide, Polyamine, ferner Polyglykolether von Alkoholen, Fettsäuren, Fettsäureestern, wie Glyceriden oder Sorbitestern, Fettaminen, Polypropylenglykolen, Alkylphenolen ; ferner Polypropylenglykolether von Alkoholen, Fettsäuren, Fettaminen. Geeignete Tenside sind z. B. beschrieben in Ullmanns Encyklopädie der techn. Chemie, 3. Auflage, Bd. 16, (1965), 724 bis 736, und J.P. Sisley, Encyclopedia of Surface-Active Agent, Chemical Publishing Comp. Inc., New York, (1964). Bevorzugte Tenside sind Ethoxylierungsprodukte von Fettalkoholen, Fetten, Fettsäuren sowie Alkansulfonate.

Beispiele für geeignete Oniumsalze der Formel IIa und IIb sind : Tetrabutylammonium-chlorid, -bromid, -iodid, -acetat, -sulfat ; Benzyl-tributylammonium-chlorid, -bromid, -iodid, Trialkyl-methylammonium-chlorid, -bromid, -iodid, vorzugsweise mit 7 bis 12 C-Atomen in den Alkylresten, wie z. B. Trioctyl-methylammonium-chlorid ; Di-alkyl-dimethylammonium-chlorid, -bromid bzw. -iodid, vorzugsweise mit 8 bis 20 C-Atomen in den Alkylresten, wie z. B. Dihexadecyl-dimethylammonium-bromid, Dilauryldimethylammonium-chlorid, Dieicosyl-dimethylammoniumchlorid ; Alkyl-trimethylammonium-chlorid, -bromid bzw. -iodid, vorzugsweise mit 10 bis 25 C-Atomen im Alkylrest, wie z. B. Hexadecyl-trimethylammonium-bromid, Octyltributylammonium-bromid ; Alkyl-dimethylbenzylammonium-chlorid, -bromid bzw. -iodid, vorzugsweise mit 10 bis 20 C-Atomen im Alkylrest ; Hexadecylpyridiniumbromid ; Tetradodecylammonium-bromid ; Tetraheptylammonium-bromid ; Tetrahexylammonium-chlorid, -bromid bzw. -iodid ; Tributylheptylammonium-bromid ; N-Benzyl-triethylammonium-chlorid ; Ethyl-trioctylphosphonium-bromid ; Tetrabutyl-phosphoniumbromid, Hexadecyl-tripropylphosphonium-bromid, Triphenylethylphosphonium-bromid ; 3-Benzyl-5(2-hydroxyethyl)-4-methyl-thiazolium-chlorid ; Trialkylammonium-chlorid, -bromid bzw. -iodid ; insbesondere mit 7 bis 12 C-Atomen in den Alkylresten ; Dialkyl-methylammonium-chlorid, -bromid, -iodid, insbesondere mit 8 bis 20 C-Atomen in den Alkylresten ; Alkyl-dimethylammonium-chlorid, -bromid bzw. -iodid, insbesondere mit 10 bis 25 C-Atomen im Alkylrest. Auch Gemische verschiedener Oniumsalze können verwendet werden.

Beispiele für weitere geeignete Phasentransferkatalysatoren sind : 12-Krone-4, 15-Krone-5, 18-Krone-6, 21-Krone-7, 24-Krone-8, Benzo-15-krone-5, Dibenzo-18-krone-6, Dicyclohexano-18-krone-6, Dibenzo-24-krone-8, Dicyclohexano-24-krone-8, Dibenzo-30-krone-10, 5,6,14,15, -Dibenzo-8,12-diaza-1,4-dioxa-cyclopentadeca-5,14-dien, 4,7,13,16,21,24-Hexaoxa-1,10-diazabicyclo-[8,8,8]-hexacosan (= Cryptand [2,2,2]), 1,16-Dimethyl($O_6$-podand-6) (= Pentaglyme), Tris(3-oxa-butyl) amin, Tris(3,6,9-trioxadecyl)amin, Tris(3,6-dioxa-heptyl)amin, Tris-(3,6-dioxaoctyl)amin, Tris(3,6,9-trioxa-undecyl)amin, Tris(3,6-dioxa-nonyl)amin, Tris(3,6,9-trioxa-dodecyl)amin, Tris(3,6,9-trioxa-tridecyl)amin, Tris(3,6,9,12,15,18-hexaoxanonadecyl)amin, Tris(3,6-dioxa-4-methyl-heptyl)amin, Hepta-ethylenglykol-dimethylether, Docosoethylenglykoldimethylether, Pentatetraconta-ethylenglykol-dimethylether, Octaethylenglykol-methyl-dodecyl-ether, Octaethylenglykol-diphenyl-ether, Octaethylenglykol-methylether-acetat ($=H_3CO—(CH_2CH_2O)_8—COCH_3$).

Es können auch Gemische oder gegebenenfalls technische Gemische von Phasentransferkatalysatoren und/oder Tensiden verwendet werden. Von dem Phasentransferkatalysator und/oder dem Tensid werden normalerweise pro mol Ausgangsverbindung der Formel I 0,000 1 bis 0,05 mol, vorzugsweise 0,001 bis 0,02 mol, eingesetzt. Besonders vorteilhaft ist es, wenn man den Phasentransferkatalysator und/oder das Tensid in Eiswasser gelöst vorlegt und darin das einzusetzende Phthalocyanin-sulfochlorid der Formel I zur Ausfällung bringt und anschließend die Iodwasserstoffsäure, die Iodwasserstoffsäure abspaltende Substanz und das weitere Reduktionsmittel zusetzt und das erfindungsgemäße Verfahren durchführt.

Als Reduktionsprodukte erhält man bei dem erfindungsgemäßen Verfahren in hohen Ausbeuten blaue und grüne Schwefelfarbstoffe in wasserunlöslicher Form, die nach an sich bekannten Verfahren, beispielsweise mit Natriumsulfid, Natriumhydrogensulfid oder Natriumdithionit, in die wasserlöslichen Leuko-Schwefelfarbstoffe überführt werden können und sich hervorragend zum Färben, insbesondere von Cellulosefasern, eignen. Man erhält brillante blaue bis grüne Färbungen hoher Farbstärke mit einem sehr guten Echtheitsniveau. Bei Verwendung eines Phasentransferkatalysators und/oder Tensids erhält man zumeist Farbstoffe mit erhöhten Farbstärken.

Die aus den wasserunlöslichen Schwefelfarbstoffen durch an sich bekannte Reduktionsmittel (vgl. beispielsweise Ch. Heid et al, Melliand Textilber. *12,* 1314 (1973) ; W.E. Wood, Rev. Progr. Coloration *7,* 80 (1976)) hergestellten Leuko-Schwefelfarbstoffe weisen eine hohe Löslichkeit auf und können als färbefertige, konzentrierte Flüssigfarbstoffe eingesetzt werden.

Es ist ferner möglich, die bei dem erfindungsgemäßen Verfahren anfallenden, wasserunlöslichen Schwefelfarbstoffe nach bereits bekannten Methoden (vgl. beispielsweise C.D. Weston in K. Venkataraman « The Chemistry of Synthetic Dyes », Vol. VII, Seiten 35 bis 68, Academic Press 1974) in Thioschwefelsäurederivate (Bunte-Salze) zu überführen.

Besondere Vorteile des erfindungsgemäßen Verfahrens im Hinblick auf Wirtschaftlichkeit und Umweltschutz sind dadurch gegeben, daß die Phthalocyaninsulfochloride in einer Stufe direkt in die entsprechenden Schwefelfarbstoffe überführt werden können und daß von Schwermetallsalzen freie Fabrikationsabwässer entstehen, deren biologischer und chemischer Sauerstoffbedarf gering ist.

Die folgenden Beispiele dienen zur weiteren Erläuterung des erfindungsgemäßen Verfahrens. Sofern nichts anderes angegeben ist, sind Teile Gewichtsteile und Prozente Gewichtsprozente.

Beispiel 1

In einem 1,3 l Tantal-Autoklaven werden 97 g (0,1 mol) Kupferphthalocyanin-tetrasulfochlorid, hergestellt durch Sulfochlorierung von 57,6 g Kupferphthalocyanin mit Chlorsulfonsäure und Thionylchlorid bei erhöhter Temperatur und anschließende Fällung auf Eis, in Form des wasserfeuchten, 40 %igen Preßkuchens in 500 ml Wasser eingetragen. Anschließend werden 2 ml 57 %ige Iodwasserstoffsäure zugegeben und bei 20 bis 25 °C unter Rühren 60 ml Schwefeldioxid aufgedrückt. Dann wird auf 95 bis 100 °C aufgeheizt und 9 Stunden bis zur Druckkonstanz von 2 bar nachgerührt. Anschließend wird kaltgerührt und entspannt. Der grüne, wasserunlösliche Schwefelfarbstoff wird durch Filtration isoliert und mit Wasser säurefrei gewaschen. Ausbeute : 170,4 g grüne Farbstoffpaste, nach dem Trocknen bei 90 °C 85 g grünes Farbstoffpulver.

Der erhaltene Farbstoff wird mit Wasser angeschlämmt und mit 100 g 60 %igem Schwefelnatrium und 250 g 30 %igem Natriumsulfhydrat gelöst. Man erhält 1 200 g einer wäßrigen färbefertigen Lösung des Farbstoffs. In dieser Form eignet sich der Farbstoff besonders gut für die Anwendung nach kontinuierlich arbeitenden Färbeverfahren. 150 g der färbefertigen Lösung des Farbstoffs werden mit Wasser auf 1 000 ml verdünnt. Mit dieser Klotzflotte wird ein Baumwollgewebe auf dem Foulard mit einer Flottenaufnahme von 80 % geklotzt. Das geklotzte Gewebe wird sofort in einen luftfreien Dämpfer eingefahren und 40 Sekunden lang bei 120 °C gedämpft. Anschließend wird gespült, wie bei Schwefelfärbungen üblich mit $H_2O_2$, Bichromat oder dgl. oxidiert, gespült und getrocknet. Man erhält so eine kräftige, klare grüne Färbung mit sehr guten Echtheiten.

Beispiel 2

Eine nach bekannten Verfahren (vgl. beispielsweise brit. Patentschrift 960 643) hergestellte Lösung von 97 g Kupferphthalocyanin-tetrasulfochlorid in Chlorsulfonsäure wird zu einer Mischung von 200 ml Wasser und 4 g Tridecyl-trimethyl-ammonium-chlorid (Tridecyl ist dabei eine Mischung von $C_{12}H_{25}$ bis $C_{14}H_{29}$-Alkylgruppen) und 500 g Eis gegeben, wobei durch Außenkühlung und zusätzliche Eiszugabe dafür gesorgt wird, daß die Temperatur während der Fällung 0 bis 5 °C nicht übersteigt.

Die wäßrige Suspension des Kupferphthalocyanin-tetrasulfochlorids wird in einen 2 l Email-Autoklaven überführt und mit 1,5 g Iod versetzt. Anschließend drückt man 60 ml Schwefeldioxid auf, rührt 1 Stunde bei 20 bis 25 °C und heizt das Gemisch unter gutem Rühren langsam auf 100 °C. Man rührt 6 Stunden bei 100 °C, kühlt dann auf 20 °C und entspannt. Der grüne, wasserunlösliche Schwefelfarbstoff wird abfiltriert und säurefrei gewaschen. Ausbeute : 260 g grüne Farbstoffpaste.

Eine Aufschlämmung dieser Farbstoffpaste in Wasser liefert entsprechend der in Beispiel 1 angegebenen Verfahrensweise mit Schwefelnatrium und Sulfhydratlauge eine färbefertige Farbstofflösung, die auf Baumwolle farbstarke grüne Färbungen mit guten Echtheitseigenschaften ergibt.

Beispiel 3

Eine in bekannter Weise hergestellte Lösung von 97 g Kupferphthalocyanintetra-sulfochlorid in Chlorsulfonsäure wird unter gutem Rühren zu einer Mischung von 3,5 g Dodecyl-benzyl-dimethylammonium-chlorid, 200 ml Wasser und 500 g Eis gegeben. Durch Außenkühlung und zusätzliche Eiszugabe wird die Fällungstemperatur bei 0 bis 5 °C gehalten. Die wäßrige Suspension des Kupferphthalocyanin-tetrasulfochlorids wird in einen 3-l-Email-Autoklaven überführt und mit 0,7 g Iod versetzt. Anschließend werden bei 5 bis 10 °C 286 g einer 40 gew.%igen wäßrigen Natriumhydrogensulfitlösung aufgedrückt. Man heizt langsam auf 120 °C, rührt 6 Stunden bei 120 °C bis zur Druckkonstanz von 4 bar nach, kühlt auf 25 °C und entspannt. Der grüne, wasserunlösliche Schwefelfarbstoff wird durch Filtration isoliert und mit Wasser säurefrei gewaschen.

Ausbeute : 203 g grüne Farbstoffpaste.

Eine wäßrige Anschlämmung dieses Farbstoffpreßkuchens entsprechend der in Beispiel 1 angegebenen Verfahrensweise liefert eine färbefertige Farbstofflösung, die auf Baumwolle grüne Färbungen hoher Farbstärke mit sehr gutem Echtheitsniveau ergibt.

Beispiele 4 bis 18

0,1 mol eines Phthalocyanin-sulfochlorids werden analog Beispiel 1 unter Einhaltung der in der nachfolgenden Tabelle angegebenen Bedingungen in Schwefelfarbstoffe überführt. Falls dabei HI eingesetzt wird, kommt diese in Form einer 57 %igen wäßrigen Lösung zur Anwendung. In der nachfolgenden Tabelle bedeuten in der 4. Spalte :

A : Tridecyl-dimethyl-benzyl-ammonium-chlorid (Tridecyl ist dabei eine Mischung von $C_{12}H_{25}$- bis $C_{14}H_{29}$-Alkylgruppen)
B : Di-heptadecyl-dimethyl-ammonium-chlorid (Heptadecyl ist dabei eine Mischung von $C_{16}H_{38}$- bis $C_{18}H_{37}$-Alkylgruppen)
D : Ethoxyliertes Rhicinusöl (mit 10 bis 20 Glykoleinheiten)
E : Ethoxylierter Oleylalkohol (mit 20 Glykoleinheiten)
F : Sekundäres Alkansulfonat mit einer Kettenlänge von 13 bis 17 C-Atomen
G : Tri-octyl-amin
H : Tris(3,6-dioxa-heptyl)amin
K : 2,7,10,13,16,19-Hexaoxa-eicosan
L : Ethyl-trioctyl-phosphonium-bromid
M : Tetra-butyl-ammonium-iodid

Ferner bedeuten in der zweiten Spalte :
Pc : Phthalocyanin
CuPc : Kupfer-phthalocyanin
CoPc : Cobalt-phthalocyanin
NiPc : Nickel-phthalocyanin
Wie das Beispiel 7 zeigt, kann das Oniumsalz der Formel II auch gleichzeitig als Iodwasserstoffsäure liefernde Substanz dienen.

| Beispiel Nr. | Eingesetztes Phthalocyanin-sulfochlorid | Zugesetzte Menge an HI, KI oder I | Zugesetzte Menge an Phasentransfer-katalysator, Tensid, tert. Amin | Reaktions-medium | Farbton auf Baum-wolle |
|---|---|---|---|---|---|
| 4 | $CuPc(SO_2Cl)_4$ | 2 g KI | 3 g A | Wasser | grün |
| 5 | $CuPc(SO_2Cl)_4$ | 3 g KI | - | 10%ige Essigsäure | " |
| 6 | $CuPc(SO_2Cl)_4$ | 2,5 g KI | - | 50 % Wasser 5 % Methanol | " |
| 7 | $CuPc(SO_2Cl)_4$ | - | 6 g M | Wasser | " |
| 8 | $CuPc(SO_2Cl)_2$ | 2 ml HI | 2 g B | " | blau |
| 9 | $Pc(SO_2Cl)_4$ | 2 ml HI | 1,6 g C | " | grün |
| 10 | $NiPc(SO_2Cl)_4$ | 2 ml HI | 2 g B | " | " |
| 11 | $CoPc(SO_2Cl)_3$ | 2 ml HI | 2 g B | " | blaugrün |
| 12 | $CuPc(SO_2Cl)_4$ | 1,5 g I | 1,2 g D | " | grün |
| 13 | $CuPc(SO_2Cl)_3$ | 1,7 g I | 1,0 g E | " | " |
| 14 | $CuPc(SO_2Cl)_4$ | 1,5 g I | 1,5 g F | " | " |
| 15 | $CuPc(SO_2Cl)_4$ | 1,5 g I | 1,3 g G | " | " |
| 16 | $CuPc(SO_2Cl)_4$ | 1,5 g I | 1,2 g H | " | " |
| 17 | $CuPc(SO_2Cl)_4$ | 1,5 g I | 1,2 g K | " | " |
| 18 | $CuPc(SO_2Cl)_4$ | 1,5 g I | 1,9 g L | " | " |

## Ansprüche

1. Verfahren zur Herstellung von Schwefelfarbstoffen der Phthalocyanin-Reihe durch Reduktion von Phthalocyaninsulfochloriden der Formel I

$$Pc(SO_2Cl)_n \qquad (I)$$

worin Pc den Rest eines metallfreien oder metallhaltigen Phthalocyanins und n die Zahl 1, 2, 3 oder 4 bedeuten, dadurch gekennzeichnet, daß die Verbindung der Formel I in Gegenwart von Iodwasserstoffsäure und eines Reduktionsmittels reduziert wird, das im sauren Reaktionsmedium Iod in Iodwasserstoffsäure überführt.

2. Verfahren nach Anspruch 1, dadurch gekennzeichnet, daß katalytische Mengen Iodwasserstoffsäure eingesetzt werden.

3. Verfahren nach Anspruch 1 und/oder 2, dadurch gekennzeichnet, daß anstelle von Iodwasserstoffsäure eine Iodwasserstoffsäure liefernde Substanz eingesetzt wird.

4. Verfahren nach einem oder mehreren der Ansprüche 1 bis 3, dadurch gekennzeichnet, daß als Reduktionsmittel, das Iod im sauren Reaktionsmedium in Iodwasserstoffsäure überführt, Schwefeldioxid oder eine Schwefeldioxid liefernde Substanz eingesetzt wird.

5. Verfahren nach einem oder mehreren der Ansprüche 1 bis 4, dadurch gekennzeichnet, daß als Reaktionsmedium Wasser verwendet wird.

6. Verfahren nach einem oder mehreren der Ansprüche 1 bis 5, dadurch gekennzeichnet, daß die Reduktion in Gegenwart eines Phasentransferkatalysators durchgeführt wird.

7. Verfahren nach einem oder mehreren der Ansprüche 1 bis 6, dadurch gekennzeichnet, daß die Reduktion in Gegenwart eines Tensids durchgeführt wird.

8. Verfahren nach einem oder mehreren der Ansprüche 1 bis 7, dadurch gekennzeichnet, daß als Phthalocyanin-sulfochlorid der Formel I Kupfer-, Nickel- und Kobaltphthalocyanin-sulfochlorid eingesetzt wird.

9. Verfahren nach einem oder mehreren der Ansprüche 1 bis 8, dadurch gekennzeichnet, daß ein Phthalocyanin-sulfochlorid der Formel I eingesetzt wird, in dem n die Zahlen 2, 3 oder 4 bedeutet.

**Claims**

1. Process for the preparation of sulphur dyestuffs of the phthalocyanine series by reducing phthalocyanine-sulphochlorides of the formula I

$$Pc(SO_2Cl)_n \quad (I)$$

wherein Pc denotes the radical of a metal-free or metal-containing phthalocyanine and n denotes the numbers 1, 2, 3 or 4, characterised in that the compound of the formula I is reduced in the presence of hydriodic acid and a reducing agent which, in the acid reaction medium, converts iodine into hydriodic acid.

2. Process according to Claim 1, characterised in that catalytic quantities of hydriodic acid are employed.

3. Process according to Claim 1 and/or 2, characterised in that a substance which provides hydriodic acid is employed instead of hydriodic acid.

4. Process according to one or more of Claims 1 to 3, characterised in that sulphur dioxide or a substance which provides sulphur dioxide is employed as the reducing agent which converts iodine into hydriodic acid in the acid reaction medium.

5. Process according to one or more of Claims 1 to 4, characterised in that water is used as the reaction medium.

6. Process according to one or more of Claims 1 to 5, characterised in that the reduction is carried out in the presence of a phase transfer catalyst.

7. Process according to one or more of Claims 1 to 6, characterised in that the reduction is carried out in the presence of a surfactant.

8. Process according to one or more of Claims 1 to 7, characterised in that phthalocyaninesulphochloride of the formula I which is employed is copper phthalocyaninesulphochloride, nickel phthalocyaninesulphochloride and cobalt phthalocyaninesulphochloride.

9. Process according to one or more of Claims 1 to 8, characterised in that a phthalocyaninesulphochloride of the formula I in which n denotes the numbers 2, 3 or 4, is employed.

**Revendications**

1. Procédé pour préparer des colorants au soufre de la série de la phtalocyanine, par réduction de phtalocyanine-sulfochlorures répondant à la formule I

$$Pc(SO_2Cl)_n \quad (I)$$

dans laquelle Pc représente le radical d'une phtalocyanine métallisée ou non et n désigne un nombre égal à 1, à 2, à 3 ou à 4, procédé caractérisé en ce qu'on réduit le composé de formule I en présence d'acide iodhydrique et d'un réducteur qui, dans le milieu réactionnel acide, transforme l'iode en acide iodhydrique.

2. Procédé selon la revendication 1 caractérisé en ce qu'on utilise des quantités catalytiques d'acide iodhydrique.

3. Procédé selon l'une des revendications 1 et 2, caractérisé en ce qu'on utilise, au lieu d'acide iodhydrique, une substance fournissant de l'acide iodhydrique.

4. Procédé selon l'une quelconque des revendications 1 à 3, caractérisé en ce qu'on utilise, comme réducteur transformant l'iode en acide iodhydrique dans le milieu réactionnel acide, du dioxyde de soufre ou une substance fournissant du dioxyde de soufre.

5. Procédé selon l'une quelconque des revendications 1 à 4, caractérisé en ce qu'on utilise l'eau comme milieu réactionnel.

6. Procédé selon l'une quelconque des revendications 1 à 5, caractérisé en ce qu'on effectue la réduction en présence d'un catalyseur de transfert de phase.

7. Procédé selon l'une quelconque des revendications 1 à 6, caractérisé en ce qu'on effectue la réduction en présence d'un surfactif.

8. Procédé selon l'une quelconque des revendications 1 à 7, caractérisé en ce qu'on utilise, comme phtalocyanine-sulfochlorure de formule I, un cuivre-, nickel- ou cobalt-phtalocyanine-sulfochlorure.

9. Procédé selon l'une quelconque des revendications 1 à 8, caractérisé en ce qu'on utilise un phtalocyanine-sulfochlorure de formule I dans lequel n désigne un nombre égal à 2, à 3 ou à 4.